# EUROPÄISCHE PATENTSCHRIFT

(11) **EP 0 647 303 B1**
(45) Veröffentlichungstag und Bekanntmachung des Hinweises auf die Patenterteilung: **23.09.1998**
(21) Anmeldenummer: 94913475.3
(22) Anmeldetag: 20.04.1994
(51) Int. Cl.: F16L 27/107

(54) **DREHGELENK**
TURNING KNUCKLE
ARTICULATION TOURNANTE

(30) Priorität: 24.04.1993 DE 4313501
(43) Veröffentlichungstag der Anmeldung: 12.04.1995
(73) Patentinhaber: PHOENIX AKTIENGESELLSCHAFT, 21079 Hamburg (DE); Kupczik, Günter, Dipl.-Ing., D-20459 Hamburg (DE)
(72) Erfinder: Kupczik, Günter, Dipl.-Ing., D-20459 Hamburg (DE); Friederich, Hans-Werner, D-21423 Winsen (DE)
(86) Internationale Anmeldenummer: DE9400428
(87) Internationale Veröffentlichungsnummer: WO9425784

(56) Entgegenhaltungen:
- DE-A- 1 965 410
- DE-A- 2 606 180
- DE-U- 8 804 366
- US-A- 4 240 653

## Beschreibung

Die Erfindung bezieht sich auf ein Drehgelenk als Anschlußstück zwischen zwei Bauteilen, wobei wenigstens ein Bauteil um seine horizontale Achse drehbar gelagert ist (Torsion).

Aus der DE-C-39 22 481 ist eine Vorrichtung zur Steuerung des Durchflusses durch Abwasserkanäle bekannt. Dabei besteht ein Bauteil aus einem bogenförmigen Mittelabschnitt, der beidseitig in horizontal auslaufende Kanalabschnitte übergeht. Das gesamte Bauteil ist dabei um seine horizontale Achse drehbar gelagert. Dieses Bauteil (auch Drehbogen genannt) ist so hoch drehbar, daß der Hochpunkt der Bogensohle mindestens so hoch hebbar ist wie der stromauf angrenzende Wasserspiegel. Zu beiden Seiten dieses Drehbogens sind nun steife (d.h. nicht bewegliche) Kanalabschnitte vorhanden, wobei die horizontal auslaufenden Kanalabschnitte des Drehbogens mit diesen steifen Kanalabschnitten über Anschlußstücke miteinander verbunden sind. Diese Anschlußstücke sind mit Gleitlagern ausgestattet, die zugleich eine Dichtfunktion besitzen. Auf diese Weise soll eine Drehbarkeit des Drehbogens zu den steifen Kanalabschnitten ohne Austrittsmöglichkeit von Abwasser gewährleistet sein.

Derartige Drehgelenke, bestehend aus Anschlußstück und Lagern, genügen jedoch nicht höchsten Anforderungen. So besteht bei Torsionen von ± 90 Grad und mehr die Gefahr der Beschädigung des Drehgelenkes wie auch des Bruches der angrenzenden, mit diesem Drehgelenk verbundenen Bauteile. Darüber hinaus sind derartige Drehgelenke in der Herstellung sehr aufwendig und damit auch teuer. Gleichzeitig sind diese Drehgelenke sehr empfindlich gegen Verschmutzung.

Von den oben erwähnten Drehgelenken sind elastische Rohrverbinder zu unterscheiden, die die Funktion haben, Montageungenauigkeiten, Schwingungen, Längenänderungen, Achs- und Winkelversetzungen der angeschlossenen Rohre zu kompensieren. Derartige Kompensatoren sind zumeist als schlauchförmige Körper mit eingebetteten Festigkeitsträgern ausgebildet (US-A-4 240 653, DE-A-19 65 410, DE-A-26 06 180, DE-U-88 04 266).

Die Aufgabe der Erfindung besteht nun insbesondere darin, für auf Torsion belastete Bauteile ein Drehgelenk bereitzustellen, das unabhängig vom Einsatzzweck höchsten Anforderungen genügt, d.h. auch bei extremen Torsionswinkeln im Hinblick auf die Anpassung der Drehbewegung wie auch auf die wirksame Abdichtung seine volle Funktionstüchtigkeit beibehält, und zwar unter Langzeitbelastungen.

Gelöst wird diese Aufgabe durch ein Drehgelenk mit einem Aufbau gemäß Kennzeichen des Anspruchs 1.

Zweckmäßige Ausgestaltungen des Drehgelenkes sind in den Ansprüchen 2 bis 11 genannt.

Die Erfindung wird im folgenden anhand von Ausführungsbeispielen unter Bezugnahme auf schematische Zeichnungen (Längsschnittdarstellungen) näher erläutert. Es zeigen:
- Fig. 1: ein Drehgelenk mit eingebetteten radialen Ringen, wobei die Oberflächenstruktur im wesentlichen wellenförmig ist;
- Fig. 2: ein Drehgelenk mit eingebetteten radialen Ringen, wobei die Oberfläche kronenförmige Erhebungen aufweist;
- Fig. 3: ein Drehgelenk mit an der Oberfläche angeordneten Ringen, die sich innerhalb von Vertiefungen befinden;
- Fig. 4: ein Drehgelenk mit integrierter Diagrammdarstellung zum Verdeutlichen des winkelverlaufs α und β der eingebetteten, fadenförmigen Festigkeitsträgern;
- Fig. 5: ein Drehbogen, der mittels des Drehgelenkes mit dem angrenzenden steifen Kanalabschnitt verbunden ist; sowie
- Fig. 6: ein Drehbogen, der mittels des Drehgelenkes und einem zusätzlichen Kompensator mit dem angrenzenden steifen Kanalabschnitt verbunden ist.

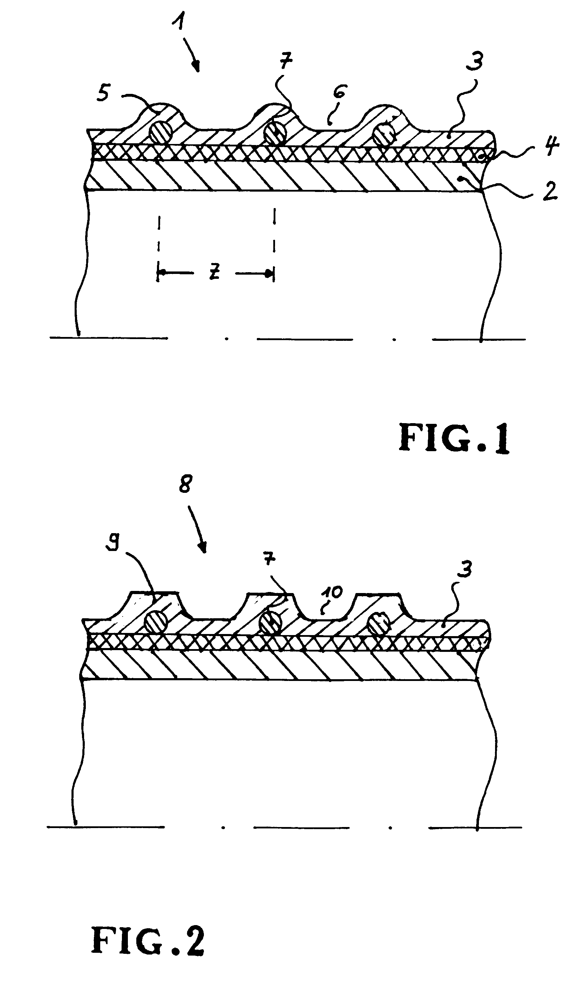

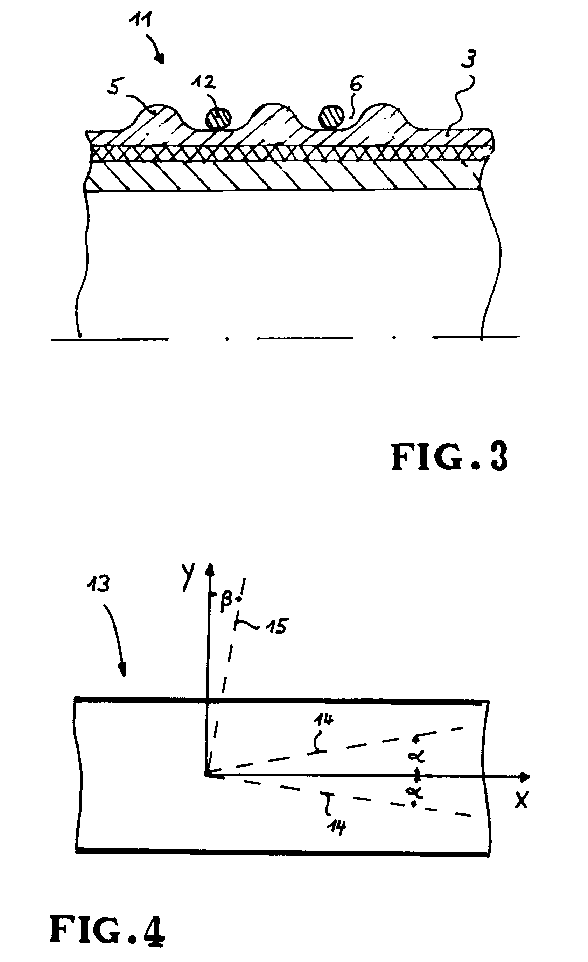

Fig. 1 zeigt ein Drehgelenk (1) als Schlauch bzw. schlauchförmigen Körper, wobei zwischen der Schlauchseele (2) und Schlauchdecke (3) ein eingebetteter Festigkeitsträger (4) vorhanden ist, der in Verbindung mit der Fig. 4 noch näher erörtert wird. Die Schlauchdecke weist außen Rippen (5) und Rillen (6) auf, die im wesentlichen wellenförmig verlaufen. Im Bereich der Rippen, und zwar innerhalb der Schlauchdecke, sind nun eingebettete Ringe (7) vorhanden, die in radialer Richtung angeordnet sind. Diese Ringe, die insbesondere aus Stahl oder Kunststoffmonofil bestehen, sind über die gesamte Länge des Drehglenkes angeordnet und haben dabei den nahezu gleichen Abstand Z zueinander. Dieser Abstand Z beträgt zweckmäßigerweise 30 bis 1000 mm, insbesondere 80 bis 250 mm.

Der Schlauch bzw. schlauchförmige Körper besteht aus einer Kautschukmischung auf der Basis von Polychloropren (CR), Naturkautschuk (NR), Etylen-Propylen-Dien-Mischpolymerisat (EPDM), Styrol-Butadien-Kautschuk (SBR), Fluorkautschuk (FKM), Isopren-Kautschuk (IR), Butadien-Kautschuk (BR), Nitrilkautschuk (NBR), Butylkautschuk (IIR), chloriertem oder bromiertem Butylkautschuk (CIIR bzw. BrIIR), chlorsulfoniertem Polyethylen (CSM), Ethylen-Vinylacetat-Kautschuk (EVA), hydriertem Nitrilkautschuk (H-NBR) oder Verschnitten dieser Kautschuktypen.

Fig. 2 zeigt nun ein Drehgelenk (8), wobei die Oberfläche der Schlauchdecke (3) kronenförmige Erhebungen (9) und bogenförmige Rillen (10) aufweist. Die Ringe (7) sind auch hier wie bei dem Ausführungsbeispiel gemäß Fig. 1 innerhalb der Schlauchdecke im Bereich der Rippen angeordnet.

Nach Fig. 3 weist die Schlauchdecke (3) des Drehgelenkes (11) wie bei dem Ausführungsbeispiel gemäß Fig. 1 außenseitig Rippen (5) und Rillen (6) auf, die im wesentlichen wellenförmig verlaufen. Die Ringe (12) sind jedoch hier außerhalb der Schlauchdecke angeordnet, und zwar innerhalb der Rillen (6).

In der Fig. 4 ist nun ein Drehgelenk (13) dargestellt, wobei zur Verdeutlichung des Verlaufs der Fäden (14, 15), die Bestandteile des eingebetteten Festigkeitsträgers (4; Fig. 1) sind, schematisch ein Diagramm eingearbeitet ist. Dabei bedeutet die Abszisse X die Achsrichtung und die Ordinate Y die Radialrichtung des Drehgelenkes. Der Winkel α der in Achsrichtung verlaufenden Fäden (14) beträgt 0 bis ±5 Grad, wobei bei einem Winkel α von ungleich Null Grad die Fäden (14) gekreuzt angeordnet sind. Der Winkel β der in Radialrichtung verlaufenden Fäden (15) beträgt ebenfalls 0 bis ±5 Grad, wobei hier bei einem Winkel β von ungleich Null Grad die Fäden (15) gekreuzt oder nicht gekreuzt (d.h. ausschließlich in eine Richtung verlaufend) angeordnet sind. Die Fäden (14, 15) bestehen aus einem hochdehnbaren Werkstoff, insbesondere auf Basis von Polyamid. Diese Werkstoffeigenschaften müssen jedenfalls die in Achsrichtung verlaufenden Fäden (14) aufweisen.

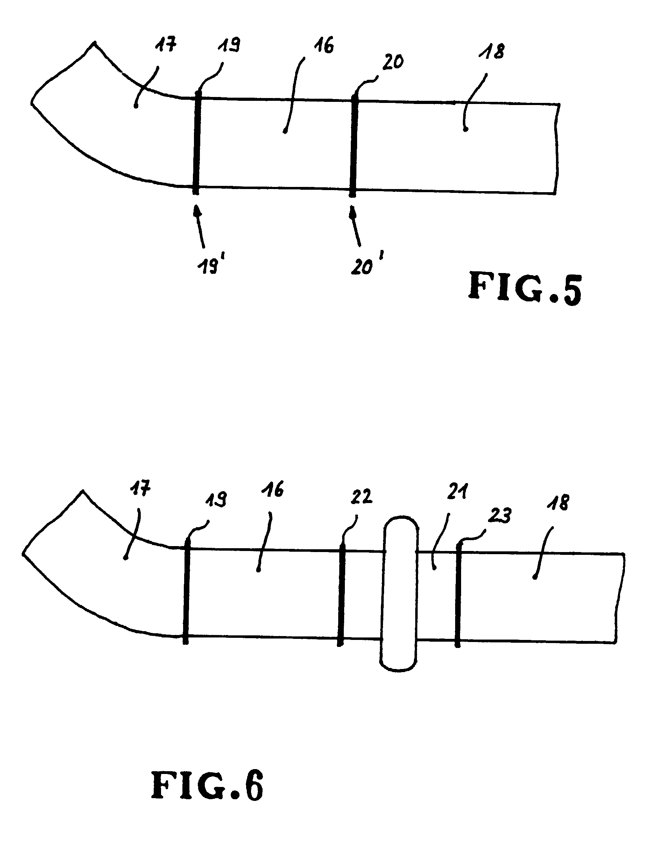

Fig. 5 zeigt nun ein Drehgelenk (16) als Anschlußstück zwischen einem Drehbogen (17) und einem steifen (d.h. nicht beweglichen) Kanalabschnitt (18). Die einzelnen Bauteile (16, 17, 18) sind dabei mittels Flansche (19, 20) und Schrauben fest und abdichtend miteinander verbunden. Auch andere Verbindungssysteme (z.B. Muffen) sind verwendbar. Hinsichtlich der Anschlußtechnologie wird auf den allgemeinen Stand der Technik verwiesen.

Bei einem Drehgelenk gemäß DE-C-39 22 481, wobei das Anschlußstück ein Stahlrohr ist, kann ein Anflanschen nur im übergangsbereich (Position 19'; Fig. 5) zwischen Drehbogen und Anschlußstück erfolgen, während die Stoßstellen des Anschlußstückes und des Kanalabschnittes (18) ausreichenden Bewegungsspielraum aufweisen muß. Zu diesem Zwecke ist das Anschlußstück gemäß DE-C-39 22 481 in diesem flanschlosen Übergangsbereich (Position 20'; Fig. 5) mit einem Gleitlager ausgestattet, das zugleich eine Dichtfunktion besitzen muß. Bei Ausfall der Drehfunktion dieses störanfälligen Drehgelenkes, bestehend aus einem Anschlußstück aus Stahl und einem Gleitlager, entstehen insbesondere in diesem übergangsbereich (Position 20'; Fig. 5) erhebliche Kräfte, die bis zum Bruch einzelner Bauteile führen kann. Mit dem erfindungsgemäßen Drehgelenk ist dieses Problem nun gelöst worden. Man kann also auf diese Weise das Drehgelenk fest und abdichtend mit dem Drehbogen (17) und dem steifen Kanalabschnitt (18) verbinden, ohne die Beweglichkeit des Gelenkes bei Torsion von ±90 Grad und mehr einzuschränken. Die Bruchgefahr ist wegen der hohen Elastizität des Drehgelenkes nicht mehr gegeben.

Da sich das Drehgelenk (1, 8, 11, 13, 16) bei der Verdrehung verkürzen will , kann nun insbesondere über die hochdehnbaren Fäden (14; Fig. 4), die in axialer Richtung verlaufen, ein entsprechender Längenausgleich geschaffen werden.

Es besteht darüber hinaus auch die Möglichkeit, gemäß Fig. 6 zusätzlich einen Kompensator (21) einzubauen, der zwischen dem Drehgelenk (16) und dem Kanalabschnitt (18) angeordnet ist. Wichtig ist, daß dieser Kompensator ausschließlich zum Längenausgleich dient, jedoch im Gegensatz zum Drehgelenk keiner Torsion unterliegt. Die einzelnen Bauteile (16, 17, 18, 21) sind auch hier über entsprechende Flansche (19, 22, 23) oder dergleichen fest und abdichtend miteinander verbunden. Hinsichtlich der Konstruktion des Kompensators (21) wird beispielsweise auf die DE-A-26 06 180 verwiesen.

Auch wenn der Anwendungsbereich des erfindungsgemäßen Drehgelenkes (1, 8, 11, 13, 16) schwerpunktmäßig in Verbindung mit einer Vorrichtung zur Steuerung des Durchflusses durch Abwasserkanäle zu sehen ist, wobei der Drehbogen (17; Fig. 5 und 6) die Durchflußsteuereinrichtung ist, so bietet der Einsatzbereich dieser Drehgelenke ein breites Spektrum, zum Beispiel bei Bagger-Leitungen, die schwimmend an der Wasseroberfläche gelagert sind. Durch Wellenbewegungen können nun bei einzelnen Leitungsbauteilen erhebliche Torsionen auftreten, die nun mittels des erfindungsgemäßen Drehgelenkes kompensiert werden können.

## Patentansprüche

1. Drehgelenk (1, 8, 11, 13, 16) als Anschlußstück zwischen zwei Bauteilen, wobei wenigstens ein Bauteil um seine horizontale Achse drehbar gelagert ist, insbesondere unter der Verwendung als Anschlußstück zwischen einem Drehbogen (17) als Durchflußsteuereinrichtung und einem steifen bzw. nicht beweglichen Kanalabschnitt (18), gekennzeichnet durch die Kombination folgender Merkmale:
- das Drehgelenk besteht aus einem Schlauch oder schlauchförmigen Körper aus elastomerem Werkstoff, wobei zwischen der Schlauchseele (2) und Schlauchdecke (3), die als Rippen-Rillen-System ausgebildet ist, ein eingebetteter Festigkeitsträger (4) vorhanden ist, der aus Fäden (14) aus einem hochdehnbaren Werkstoff besteht, die ein- oder mehrlagig ausgebildet sind und dabei in einem Winkel α verlaufen, der - bezogen auf die Achsrichtung X des Drehgelenkes - Null Grad beträgt oder bei gekreuzter Anordnung der Fäden bei einem Maximalwinkel α von ± 5 Grad nur unwesentlich von Null Grad abweicht; wobei
- die in Achsrichtung X verlaufenden Fäden (14) zusätzlich mit Fäden (15) versehen sind, die in einem Winkel β verlaufen, der - bezogen auf die Radialrichtung Y des Drehgelenkes - Null Grad beträgt oder bei gekreuzter oder nicht gekreuzter Anordnung der Fäden bei einem Maximalwinkel β von ± 5 Grad ebenfalls nur unwesentlich von Null Grad abweicht; wobei ferner
- das Drehgelenk zusätzlich mit Ringen (7, 12) versehen ist, die über die gesamte Länge des Drehgelenkes in radialer Richtung angeordnet sind und dabei den nahezu gleichen Abstand Z zueinander haben.

2. Drehgelenk nach Anspruch 1, dadurch gekennzeichnet, daß der Schlauch bzw. schlauchförmige Körper aus einer Kautschukmischung auf der Basis von Polychloropren (CR), Naturkautschuk (NR), Etylen-Propylen-Dien-Nischpolymerisat (EPDM), Styrol-Butadien-Kautschuk (SBR), Fluorkautschuk (FKM), Isopren-Kautschuk (IR), Butadien-Kautschuk (BR), Nitrilkautschuk (NBR), Butylkautschuk (IIR), chloriertem oder bromiertem Butylkautschuk (CIIIR bzw. BrIIR), chlorsulfoniertem Polyethylen (CSM), Ethylen-Vinylacetat-Kautschuk (EVA), hydriertem Nitrilkautschuk (H-NBR) oder Verschnitten dieser Kautschuktypen besteht.

3. Drehgelenk nach Anspruch 1 oder 2, dadurch gekennzeichnet, daß die in Achsrichtung X des Drehgelenkes verlaufenden Fäden (14), aus einem Werkstoff auf Basis von Polyamid bestehen.

4. Drehgelenk nach einem der Ansprüche 1 bis 3, dadurch gekennzeichnet, daß die Ringe (7, 12) einen Abstand Z von 30 bis 1000 mm, insbesondere 80 bis 250 mm, haben.

5. Drehgelenk nach einem der Ansprüche 1 bis 4, dadurch gekennzeichnet, daß die Ringe (7, 12) aus Stahl oder Kunststoffmonofil sind.

6. Drehgelenk nach einem der Ansprüche 1 bis 5, dadurch gekennzeichnet, daß die Ringe (12) außerhalb der Schlauchdecke (3) angeordnet sind, und zwar in den Rillen (6, 10).

7. Drehgelenk nach einem der Ansprüche 1 bis 5, dadurch gekennzeichnet, daß die Ringe (7) innerhalb der Schlauchdecke (3) angeordnet sind, und zwar im Bereich der Rippen (5, 9).

8. Drehgelenk nach einem der Ansprüche 1 bis 7, dadurch gekennzeichnet, daß die Rippen (5) und Rillen (6) im wesentlichen wellenförmig verlaufen.

9. Drehgelenk nach einem der Ansprüche 1 bis 7, dadurch gekennzeichnet, daß die Rippen (9) kronenförmig und die Rillen (10) bogenförmig ausgebildet sind.

10. Drehgelenk nach einem der Ansprüche 1 bis 9, dadurch gekennzeichnet, daß das Drehgelenk zusätzlich mit einem Kompensator (21) aus elastomerem Werkstoff versehen ist, der ausschließlich dem Längenausgleich dient.

11. Drehgelenk nach Anspruch 10, dadurch gekennzeichnet, daß der Kompensator (21) zwischen dem Drehgelenk (16) und dem steifen, d.h. nicht drehbaren, Bauteil (18) angeordnet ist.

## Claims

1. A hinge joint (1,8,11,13,16) as the connector between two components, where at least one component is supported to be able toe turn about a horizontal axis, especially in the case of employment as the connector between a bend (17) as a flow control device and a rigid or non-movable channel portion (18), characterized by the combination of the following features:
- the hinge joint consists of a hose or a body of elastomeric material in the form of a hose, having between the core (2) of the hose and its cover (3) which is formed as a rib-and-groove system, an embedded strength-carrier (4) consisting of threads (14) which are of highly stretchable material and formed in one or more layers by running at an angle α which - referred to the direction X axial to the hinge joint - amounts to zero degrees or in the case of an arrangement of the threads crossed at a maximum angle α of ± 5 degrees, deviates only negligibly from zero degrees; whilst
- the threads (14) running in the axial direction X are provided in addition with threads (15) which run at an angle β which - referred to the direction Y radial to the hinge joint - amounts to zero degrees or in the case of an arrangement of the threads crossed or not crossed at a maximum angle β of ± 5 degrees, likewise deviates only negligibly from zero degree; whilst
- the hinge joint is further provided in addition with rings (7, 12) which are arranged in the radial direction over the whole length of the hinge joint at a nearly constant distance Z apart.

2. A hinge joint as in Claim 1, characterized in that the hose or body in the form of a hose consists of a rubber mixture on the basis of polychloroprene (CR), natural india rubber (NR), ethylene-propylene-diene-copolymer (EPDM), styrene-butadiene rubber (SBR) fluoro-caoutchouc (FKM), isoprene rubber (IR), butadiene rubber (BR), nitrile rubber (NBR), butyl rubber (IIR), chlorinated or brominated butyl rubber (CIIIR resp. BrIIR), chlorosulphonated polyethylene (CSM), ethylene-vinyl acetate rubber (EVA), hydrated nitrile rubber (H-NBR), or blends of these types of rubber.

3. A hinge joint as in claim 1 or 2, characterized in that the threads (14) running in the direction X axial to the hinge joint consist of a material on the basis of polyamide.

4. A hinge joint as in one of the Claims 1 to 3, characterized in that the rings (7, 12) have a spacing Z of from 30 to 1000 mm, especially from 80 to 250 mm.

5. A hinge joint as in one of the Claims 1 to 4, characterized in that the rings (7, 12) are of steel or plastics monofilament.

6. A hinge joint as in one of the Claims 1 to 5, characterized in that the rings (12) are arranged ouside the cover (3) of the hose, that is in the grooves (6, 10).

7. A hinge joint as in one of the Claims 1 to 5, characterized in that the rings (7) are arranged inside the cover (3) of the hose, that is, in the region of the ribs (5, 9).

8. A hinge joint as in one of the Claims 1 to 7, characterized in that the ribs (9) and grooves (6) run essentially in an undulation.

9. A hinge joint as in one of the Claims 1 to 7, characterized in that the ribs (9) are made in the shape of a crown and the grooves (10) are made arcuate.

10. A hinge joint as in one of the Claims 1 to 9, characterized in that the hinge joint is provided in addition with a compensator (21) of elastomeric material, which serves exclusively to equalize the lengths.

11. A hinge joint as in Claim 1, characterized in that the compensator (21) is arranged between the hinge joint (16) and the rigid, i.e., non-turnable component (18).

## Revendications

1. Articulation tournante (1, 8, 11, 13, 16) jouant le rôle d'une pièce de raccordement entre deux éléments d'une structure, l'un au moins de ces éléments étant monté à rotation autour de son axe horizontal, en particulier dans le cas d'une utilisation comme pièce de raccordement entre un coude pivotant (17), jouant le rôle d'un dispositif de commande d'écoulement, et un tronçon de conduit rigide ou non mobile (18), caractérisée par la combinaison des caractéristiques suivantes:
- l'articulation tournante est constituée d'un tuyau souple ou d'un corps en forme de tuyau souple en un matériau élastomère, une armature noyée (4) étant alors présente entre l'âme (2) du tuyau souple et la couverture (3) du tuyau souple, qui est réalisée sous forme d'un système de nervures et de gorges, cette armature étant constituée de fils (14) en un matériau hautement extensible, qui sont agencés en une ou plusieurs couches et s'étendent alors sous un angle a, lequel, rapporté à la direction axiale X de l'articulation tournante, est égal à zéro degré ou, dans le cas d'une disposition croisée des fils, ne s'écarte que dans une mesure peu importante de zéro degré, avec un angle a maximum de ± 5 degrés;
- les fils (14), qui s'étendent dans la direction axiale X, étant alors pourvus en plus de fils (15) qui s'étendent sous un angle β, lequel, rapporté à la direction radiale Y de l'articulation tournante, est égal à zéro degré ou, dans le cas d'une disposition croisée ou non croisée des fils, ne s'écarte également que dans une mesure peu importante de zéro degré, avec un angle β maximum de ± 5 degrés;
- l'articulation tournante étant en outre pourvue, en plus, d'anneaux (7, 12), qui sont disposés en direction radiale sur la totalité de la longueur de l'articulation tournante et présentent alors pratiquement le même écartement Z entre eux.

2. Articulation tournante selon la revendication 1, caractérisée en ce que le tuyau souple ou le corps en forme de tuyau souple est réalisé en un mélange de caoutchoucs à partir de polychloroprène (CR), de caoutchouc naturel (NR), d'un copolymère d'éthylènepropylène-diène (EPDM), de caoutchouc de styrènebutadiène (SBR), de caoutchouc au fluor (FKM), de caoutchouc d'isoprène (IR), de caoutchouc de butadiène (BR), de caoutchouc nitrile (NBR), de caoutchouc butyle (IIR), de caoutchouc butyle chloré ou bromé (CIIIR ou BrIIR), de polyéthylène chlorosulfoné (CSM), de caoutchouc d'éthylène et d'acétate de vinyle (EVA), de caoutchouc nitrile hydrogéné (H-NBR) ou de mélanges de ces variétés de caoutchouc.

3. Articulation tournante selon la revendication 1 ou 2, caractérisée en ce que les fils (14), qui s'étendent dans la direction axiale X de l'articulation tournante, sont réalisés en un matériau à base de polyamide.

4. Articulation tournante selon l'une des revendications 1 à 3, caractérisée en ce que les anneaux (7, 12) présentent un écartement Z de 30 à 1000 mm, en particulier de 80 à 250 mm.

5. Articulation tournante selon l'une des revendications 1 à 4, caractérisée en ce que les anneaux (7, 12) sont en acier ou en monofil de matière plastique.

6. Articulation tournante selon l'une des revendications 1 à 5, caractérisée en ce que les anneaux (12) sont disposés à l'extérieur de la couverture (3) du tuyau souple, et plus précisément dans les gorges (6, 10).

7. Articulation tournante selon l'une des revendications 1 à 5, caractérisée en ce que les anneaux (7) sont disposés à l'intérieur de la couverture (3) du tuyau souple, et plus précisément dans la région des nervures (5, 9).

8. Articulation tournante selon l'une des revendications 1 à 7, caractérisée en ce que les nervures (5) et les gorges (6) s'étendent sous une forme sensiblement ondulée.

9. Articulation tournante selon l'une des revendications 1 à 7, caractérisée en ce que les nervures (9) sont réalisées en forme de couronne et les gorges (10), en forme d'arc.

10. Articulation tournante selon l'une des revendications 1 à 9, caractérisée en ce que l'articulation tournante est en plus munie d'un compensateur (21) en un matériau élastomère, qui sert exclusivement à la compensation de longueur.

11. Articulation tournante selon la revendication 10, caractérisée en ce que le compensateur (21) est disposé entre l'articulation tournante (16) et l'élément (18) rigide, c'est-à-dire non tournant.
